# EUROPEAN PATENT SPECIFICATION

(11) **EP 0 374 343 B1**
(45) Date of publication and mention of the grant of the patent: **01.09.1993**
(21) Application number: 88870190.1
(22) Date of filing: 19.12.1988
(51) Int. Cl.: F16K 5/04, F16K 5/18

(54) **Valve**
Ventil
Robinet

(43) Date of publication of application: 27.06.1990
(73) Proprietor: Ferrer Beltran, José Maria, E-46131 Bonrepos (Valencia) (ES)
(72) Inventor: Ferrer Beltran, José Maria, E-46131 Bonrepos (Valencia) (ES)
(74) Representative: Claeys, Pierre

(56) References cited:
- BE-A- 664 027
- DE-C- 669 834
- GB-A- 761 313
- US-A- 4 489 915

## Description

The present invention relates to a valve according to the preamble of the claim.

Such a valve is disclosed in US-A-4,489,915. In this valve, the closure member is a metallic plug which can be submitted to an axial pressure deflecting the side walls of the plug through means for applying pressure such as a screw, a threaded collar, a.s.o. Such a valve arrangement is very complicate and certainly costly.

It is an object of the present invention to provide a shaft for valves with some features overcoming the foregoing of the prior art known on the market and destined for analogous uses, besides bringing forward the necessary conditions for reducing the costs, as its manufacturing is obtained by moulding, in semi-elastic material, preferably plastic material, eliminating the mechanized processes which are needed for the traditional metallic shafts.

In order to solve such problems, there was provided according to the invention a valve according to the claim.

The advantages of the present invention with respect to the conventional shafts of rigid material reside in the fact that in the inner passage of the shaft in question exists a thinned zone or zone which material was cut down or lowered which coincides with the fluid outlet manifold when the valve is closed so that the pressure exerted by the fluid onto the thinned zone determines a tighter closing than the one effected by the mentioned shafts of rigid material, due to the fact that the cited thinned zone provides a better adjustment to the outlet manifold, consequently improving the sealing.

Another feature of the present shaft is the peripherical throat determining an extreme cylindrical portion of a bigger diameter than the one of the shaft. This cylindrical zone acts as a contact piece with the valve member, really determining the total watertightness of the same, working as a ring or tightness joint.

Besides the before mentioned advantages, the shaft consists of semi-rigid material, allowing to attain with one sole piece the function of the whole tightness system of the valve, therefore eliminating the traditional ring joints, sealing packings, etc.

The above brief specification, features and advantages of the present invention will be more fully appreciated by reference of the following detailed description of a presently preferred embodiment when taken in conjunction with the accompanying drawings, wherein :

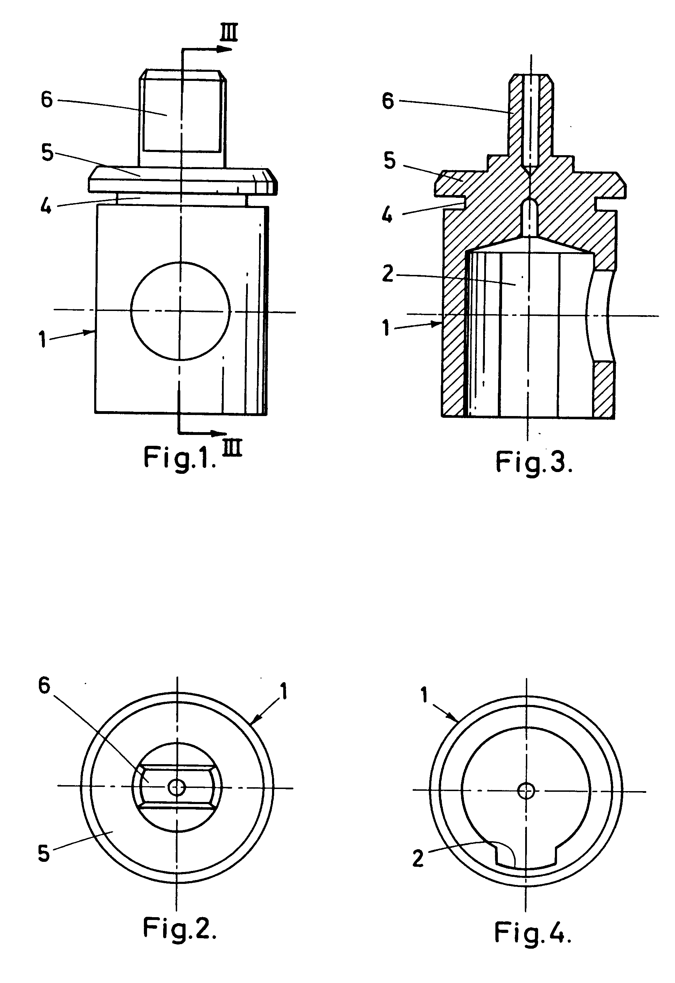

Fig. 1 illustrates the shaft in an end view.
Fig. 2 illustrates an upper view of the former figure.
Fig. 3 is a diametral section of the shaft.
Fig. 4. illustrates said shaft seen from its under side.

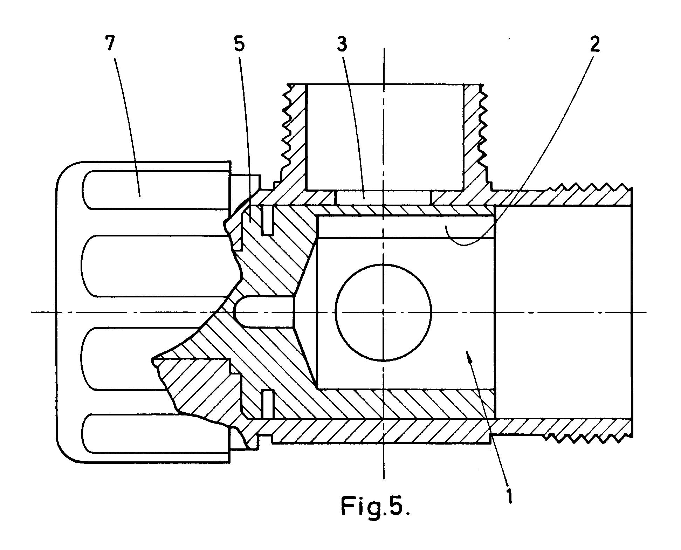

Fig. 5 is a sectional view of the drive shaft mounted in a fluid piping valve.

And as to such figures the referred improved object consists of a shaft designated -1- destined to drive fluid piping valves. Said shaft -1- is of semi-elastic material and characterized by showing on the surface of its inner conduction a thinned zone or a zone which material is cut down designated with -2-, which coincides with the fluid outlet piping -3- when the valve is closed, so that the pressure exerted by the fluid on said thinned zone determines a tighter seal than the one effected by the conventional shaft of rigid material, due to the fact of producing a better adjustement of the thinned zone -2- to the outlet manifold -3-.

Another new feature of the shaft -1- consists in providing the same with a peripherical throat -4- which determines the cover or cap of the cylindrical zone of the shaft in another zone -5- of a slightly bigger diameter, which constitutes the contact piece with the inner side of the valve element, determining the total water-tightness of the same, realizing the functions of the thightness seal or joint.

The throat -4- facilitates the suitable flexibility of the zone of bigger diameter -5-, to allow the perfect adjustment of this last one to the inner side of the valve.

The mentioned drive shaft -1- is connected by its end -6- with the control element -7- of the valve, as it is usual in such cases.

## Claims

1. Valve comprising a valve housing having an inlet, an outlet (3) and a cavity extending therebetween, a valve closure member (1) received in said cavity of the valve housing, said closure member being a cylindrical monopiece element provided at one axial end with a pin (6) forming a connection portion with a valve actuating element (7) and provided at the other axial end with an axial blind bore and a radial orifice in its side wall, the said closure member (1) having a peripheral groove (4) in its external surface in the region of said one axial end, so that the said end is formed by a ring portion (5),
characterized in that
the said closure member (1) is made of semi-elastic material and is provided with a radially thinned or material lowered zone (2) in a circumferentially limited area of the inner side surface of the blind bore, said zone closing, in the closed position of the valve, the outlet (3) of the valve housing and providing a tight sealing under fluid pressure built up in the blind bore, and in that the ring portion (5) of the closure member (1) is of slightly larger diameter than the remaining part of the member (1), said ring portion (5) engaging the inner surface of the valve housing cavity in order to form a tight sealing area.

## Patentansprüche

1. Ventil, aufweisend ein Ventilgehäuse mit einer Einlaßöffnung, einer Auslaßöffnung (3) und einen sich dazwischen erstreckenden Hohlraum, ein im Hohlraum des Ventilgehäuses aufgenommenes Schließteil (1), wobei das Schließteil ein zylindrisches, einstückiges Element ist, das an einem axialen Ende mit einem Stift (6), der einen Verbindungsabschnitt mit einem Ventilbetätigungselement (7) bildet, und am anderen axialen Ende mit einer axialen Blindbohrung und einer radialen Öffnung in seiner Seitenwandung versehen ist, wobei das Schließteil (1) eine periphere Nut in seiner äußeren Oberfläche im Gebiet des einen axialen Endes hat, so daß besagtes Ende durch einen Ringabschnitt (5) gebildet ist,
**dadurch gekennzeichnet,**
daß das Schließteil (1) aus halbelastischem Material gefertigt und mit einer radial abgedünnten oder materialreduzierten Zone (2) in einem in Umfangsrichtung begrenzten Gebiet der inneren seitlichen Oberfläche der Blindbohrung versehen ist, wobei besagte Zone in geschlossener Stellung des Ventils die Auslaßöffnung (3) des Ventilgehäuses verschließt und unter in der Blindbohrung aufgebautem Fluiddruck eine dichte Abdichtung bewirkt, und dadurch, daß der Ringabschnitt (5) des Schließteils (1) von geringfügig größerem Durchmesser als der verbleibende Teil des Teils (1) ist, wobei der Ringabschnitt (5) mit der inneren Oberfläche des Hohlraumes des Ventilgehäuses in Berührung steht und ein Gebiet dichter Abdichtung bildet.

## Revendications

1. Robinet comprenant un corps de robinet comportant une entrée, une sortie (3) et une cavité qui s'étend entre elles, un élément de fermeture de robinet (1) logé dans cette cavité du corps de robinet, cet élément de fermeture étant un élément monopièce cylindrique pourvu à une première extrémité axiale d'un goujon (6) formant une partie de liaison avec un élément d'actionnement de robinet (7) et à l'autre extrémité axiale d'un trou borgne axial et d'un orifice radial dans sa paroi latérale, cet élément de fermeture (1) présentant une gorge périphérique (4) dans sa surface externe dans la région de la première extrémité axiale de façon que cette extrémité soit formée d'une partie annulaire (5),
caractérisé en ce que
l'élément de fermeture (1) est réalisé en une matière semi-élastique et pourvu d'une zone (2) radialement amincie ou réduite en matière dans un espace circonférentiellement limité de la surface latérale interne du trou borgne, cette zone fermant, dans la position fermée du robinet, la sortie (3) du corps de robinet et fournissant une étanchéité serrée sous la pression de fluide constituée dans le trou borgne et en ce que la partie annulaire (5) de l'élément de fermeture (1) est d'un diamètre légèrement plus grand que la partie restante de l'élément (1), cette partie annulaire (5) coopérant avec la surface interne de la cavité du corps de robinet en vue de former une zone d'étanchéité serrée.
